# EUROPEAN PATENT APPLICATION

(11) **EP 4 737 012 A1**
(43) Date of publication of application: **06.05.2026**
(21) Application number: 24754379.6
(22) Date of filing: 20.06.2024
(51) Int. Cl.: B05B 9/047, B01F 33/501, B01F 35/71, B01F 35/80, B05C 17/005, F16L 55/1645, F16L 55/18, B05C 7/02, B05C 11/10

(54) **INJECTION MACHINE FOR REPAIRING CONDUITS AND PIPES**

(30) Priority: 28.06.2023 ES 202330540
(71) Applicant: DISTRA CHEMICAL, S.L., 47008 Valladolid (ES)
(72) Inventor: CALVO VILLANUEVA, Javier, 47008 Valladolid (ES)
(74) Representative: Ungria López, Javier
(86) International application number: PCT/ES2024/070390
(87) International publication number: WO 2025/003542

(57) **Abstract**

The present invention relates to an injection machine (1) for easy repairing of conduits and/or pipes, without requiring construction work, wherein said injection machine (1) comprises a frame (2) and a linear actuator (3), which consists of a pneumatic cylinder, which in turn comprises a support (31) to which two cartridges (4) of materials for repairing conduits can be coupled. The injection machine (1) further comprises a mixer element (5) configured to receive the materials for repairing conduits, from each of the cartridges (4), and mix said materials, and a sprinkler head (6) connected to the mixer element (5), which comprises an inlet for compressed air fluid and a joint outlet for mixed materials and said compressed air fluid. The linear actuator (3) is configured to extract and steer, towards the mixer element (5), the materials for repairing conduits from the cartridges (4), when said linear actuator (3) is activated; such that the sprinkler head (6) is configured to spray the mixture of materials from the cartridges (4), using the compressed air introduced into said sprinkler head (6). The invention further comprises a method for repairing conduits or pipes using the injection machine (1) described.

## Description

### Object of the invention

The present invention consists of an injection machine, the configuration and design of which allows for quick, and therefore economical, repair of pipes or conduits damaged by cracks, fissures or breaks that can generate infiltrations within the enclosures in which they are located.

The present invention has application in the field of construction, more specifically in the repair of any type of conduits, especially conduits arranged to convey or flow fluids, which are installed and are difficult to access by the user.

### Technical problem to be resolved and background of the invention

It is common, in buildings of any type comprising plumbing or sanitation installations, the existence of problems with the pipes or conduits comprised by said installations, especially if said pipes or conduits have a long useful life. Problems such as deterioration due to use over time, breakage due to inadequate use or surrounding installations, leaks in joints due to poor quality installation.

Normally, in order to solve said problems, it is required to cut or open the wall or enclosure where the entire conduit can be located, until finding the point or area where infiltrations or leaks are being created that can affect the integrity of the building.

Once the damaged conduit or pipe is located, depending on the damage, it may be necessary to replace the affected pipe or section with a new one, with the economic cost that this entails, due to the time required to carry out said task, as well as the materials used.

Likewise, these repairs generate a series of inconveniences for the users of the buildings where the breakdown is located, related to the generation of dust, breakage of decorative elements such as tiles, which can cause additional costs depending on the type of facility.

Due to this, a system is required that allows these repair operations to be carried out, causing the least possible inconvenience to the user and at a lower cost than that required for the aforementioned repairs.

For this reason, there are machines or systems on the market aimed at repairing conduits or pipes by injecting resins, using probes or cannulas that allow said conduits to be sealed from the inside.

The problem with these systems is generated by an irregular distribution of the repair resins over the section of the damaged pipe, which can hinder the correct operation of said pipe, use of resins with reduced resistance to the required use, or the difficulty of getting the resin to places that are difficult to access due to the complexity of the path of the pipe to be repaired.

### Description of the invention

To solve the problems mentioned above, the present invention proposes an injection machine for repairing conduits and pipes, which comprises:
- a frame;
- a linear actuator, preferably a pneumatic cylinder, supported on the frame, wherein said linear actuator comprises a support configured to couple two cartridges of materials for repairing conduits;
- a control and operation system for the injection machine;
- a mixer element configured to receive the materials for repairing conduits, from each of the cartridges couplable to the linear actuator support, and mixing said materials; and
- a sprinkler head connected to the mixer element, comprising an inlet for compressed air fluid, and a joint outlet for mixed materials and said compressed air fluid;
wherein the linear actuator is configured to extract and steer, towards the mixer element, the materials for repairing conduits from the cartridges couplable to the linear actuator support, when said linear actuator is activated; and wherein the sprinkler head is configured to spray the mixture of materials from the cartridges, using the compressed air introduced into said sprinkler head.

Although the injection machine requires cartridges with material for its operation for repairing damaged conduits or pipes, said cartridges, being consumable elements, are not part of the invention as such, and can be marketed separately. The invention of the defined injection machine is configured to be assembled to said cartridges and to mix the different components same have therein.

The defined frame allows holding the mechanical components of the injection machine that are not introduced inside the conduits or pipes to be repaired, such as the linear actuator, as well as the elements comprised in the control and operation system of the injection machine. That is, all the buttons and pressure gauges that allow the user to control their operation from the outside of said conduits. Preferably, the frame is made of stainless steel as it is a material suitable for the use described.

As indicated, the linear actuator preferably comprises a pneumatic cylinder, since the injection machine comprises an operation which, also preferably, does not require an electrical connection or batteries to spray the repair material, being just required to have a connection to a compressor or an element that can provide air at a specific pressure, through which the linear actuator can be activated and regulated, as well as cause the sprinkler head to operate.

Preferably, the linear actuator support of the injection machine is configured to couple only to two cartridges, which can contain or package different materials, for repairing conduits, so that the configuration of said machine allows mixing both materials, before performing the repair spraying, to obtain a two-component resin. In other words, the injection machine is configured to be coupled to two cartridges, where each of them contains different materials, to mix and spray same already mixed, as when they are mixed, they may comprise characteristics and conditions suitable for the use described, such as a rapid solidification, as well as high resistance to abrasion and wear generated inside the conduit or pipe to be treated, which they do not comprise separately.

If required, the machine could also be modified to accommodate more than two cartridges if the combination or mixture of three or more materials contained in said cartridges could provide a compound with characteristics suitable for the use described.

The control and operation system of the injection machine allows the user to activate and deactivate the machine, as well as determine its operation by selecting the required values for the displacement of the linear actuator or the rotation speed of the sprinkler head.

The mixer element configured to receive the materials for repairing conduits, from each of the cartridges couplable to the linear actuator support, and mix said materials, allows said materials not to be combined or mixed until the moment of application, since the user expects said materials to undergo rapid solidification when mixed. The mixing ratio is determined by the volume of said cartridges, which comprise the same or different volumes, depending on the mixing ratio.

The sprinkler head comprises an inlet of compressed air fluid as well as an outlet of said air mixed with the materials also mixed for repairing conduits, so that the regulation of said flow of compressed air determines the rotation speed of said head, which, in turn, determines the amount and distance of mixing of material sprayed.

The main embodiment indicates that the linear actuator is configured to extract and steer or convey, towards the mixer element, the materials for repairing conduits from the cartridges couplable to the linear actuator support, when said linear actuator is activated. Said extraction and conveying is carried out by the linear actuator, when it is activated, moving linearly, because the cartridges to be assembled to the injection machine are configured to expel the contents they contain when pressed by a movable base, remaining attached to the support of the linear actuator, releasing the material from an end part, opposite to the base subjected to the pressure of the linear actuator, which is connected to the mixer element.

In a preferred embodiment, the linear actuator comprises a pneumatic cylinder that has an effective diameter between 50 and 300 mm and a stroke between 150 and 350 mm since the volume that can be emptied from the cartridges, for this diameter and this stroke, represents a sufficient amount of volume to repair most conduit or pipe breakdowns.

In one embodiment, the linear actuator comprises sliding rods, preferably four sliding rods, inside the linear actuator, which are configured to linearly move two pistons of the linear actuator. These sliding rods are distributed in a regular way, suitable for being able to push the two pistons with the same force, so that the amount of material expelled, for each of the cartridges pressed by each of the pistons, is the amount intended by the user.

In one embodiment, the support of the linear actuator comprises fixed rods, preferably six fixed rods, oriented in a direction of actuation of the linear actuator, said fixed rods being connected by means of attachment plates by end parts of said fixed rods, wherein the fixed rods are configured to support the two cartridges of materials for repairing conduits.

In one embodiment, the linear actuator support is configured to couple two cartridges of the same or different volumes. In other words, the objective of the invention is that, as each cartridge contains a different component, they can be mixed with the desired ratio, depending on the volume of said cartridges, without the need for additional elements that control the flow rates of each of the materials.

Typically, cartridges with ratios of 2-1; 3-1 or 1-1 product volume ratio of each of the cartridges will be used. For example, 2-1 cartridges contain twice as much of one component (A) as the other (B).

By inserting the cartridge into the linear actuator support, and activating the same, the cylinder moves the same distance in one component (A) as in the other (B), in this way the desired mixture of each of the components is achieved.

The injection machine may also comprise removable, interchangeable support elements which can be supported on the fixed rods, so that the cartridges can be easily adjusted depending on the size of their cross section.

In one embodiment, the injection machine comprises a centring device connected to the sprinkler head. In other words, the head is supported on a centring element so that it centres same inside the pipe, and thus, in this way, ensuring that the entire interior perimeter of the pipe has the same product thickness. Without the centring element, the head would not be centred in the pipe and, for example, in horizontal pipes it would drag over the lower portion of the pipe and, therefore, the lower area of the pipe would have a product thickness greater than the upper portion, where the mixed product may not barely reach.

The main criterion for selecting the sprinkler head is the diameter of the pipe and the volume regime to be sprayed since, depending on the design, some heads are capable of delivering more product flow than others at the same rotation speeds and also of launching the product at a greater distance.

In one embodiment, the injection machine comprises a compressed air inlet in the frame, configured to connect the injection machine to an air compressor, which is not comprised in the injection machine; and a first flexible conduit, configured to flow compressed air from the frame to the sprinkler head.

In one embodiment, the injection machine comprises a second flexible conduit, configured to convey the mixture of materials from the mixer element to the sprinkler head. In other words, in this embodiment, the mixer element and the sprinkler head are two different, separate elements, connected by a second flexible conduit in the shape of a cannula or similar, so as to allow the mixture to be conveyed to the sprinkler head in a short time so that said mixture does not solidify. Likewise, it allows the sprinkler head to easily enter the inside of the pipe to be repaired, allowing said second flexible conduit to adjust and deform according to the requirements of the pipe.

In a different embodiment than the preceding one, the mixer element and the sprinkler head are comprised in a single device. That is to say, in a single element or device there is the head and the element where the mixing of the components of the cartridges occurs, this embodiment being really suitable when resins are used that dry quickly at the time of making the mixture, that is why each of the components are transported separately to practically the entrance of the head, where the mixing is carried out. In this way, the sprinkler head comprises two material inlets and a compressed air inlet, having only one outlet of material mixed with compressed air.

In one embodiment, the injection machine comprises two third flexible conduits, each configured to separately convey the material from each cartridge to the mixer element. In the case of the preceding embodiment, where the mixer element and the sprinkler head are comprised in a single device, the two third flexible conduits would be connected to said single device.

In one embodiment, the control and operation system is configured to control a rotation speed of the sprinkler head by regulating the injection of compressed air to said sprinkler head, as well as the output speed of materials from the cartridges by regulating the linear actuator.

To this end, in one embodiment, the control and operation system comprises an air injection flow regulator and a control panel comprising three control knobs, two pressure regulators and two pressure gauges.

One of these control knobs regulates the rotation speed of the sprinkler head depending on the flow of compressed air directed to said head. In order to control the revolutions or the flow of air coming out of this outlet, the injection machine uses the air injection flow regulator.

The resin flow rate is regulated by the pressure of the linear actuator on the cartridge. The greater the force exerted on the cartridge, the more product comes out and therefore the greater the flow rate.

Now, it is necessary to reach a balance since the greater the flow of product, the greater the flow of air in the head that is required to be able to remove that excess product. Likewise, if a large flow of product is introduced, it is necessary to move the head faster so that too much product thickness is not projected inside the pipes to be repaired.

Likewise, the machine also preferably comprises an emergency button that allows the operation of said machine to be blocked or stopped completely.

In one embodiment, the conduit repair materials contained in the cartridges comprise a two-component resin, when said materials are mixed. Typically, these resins consist of polymer glues that harden when mixed with a catalyst, making them very resistant. The mixture provides a material that absorbs moisture, which is an advantage in protecting metals as it prevents their corrosion. Given these qualities, it is common to use it in the repair of fibreglass boats or tanks, in connecting or reconstructing parts or as a filler in wood.

In one embodiment, the injection machine comprises a connection to an electrical source, and in a more specific embodiment, dependent on the preceding one, the injection machine comprises a direct current motor. In other words, for said motor to work, the injection machine must be connected to the electrical network, otherwise, said motor cannot be turned on and, therefore, it does not work. To convert alternating current to direct current, it has inside a power supply and a controller board (driver) to control the speed of rotation of the motor, as well as the direction of rotation. This rotation of the motor can be used to house therein an axle cable that allows cleaning small pipe conduits, being a very useful feature in pipe or conduit repair processes.

The invention also comprises a method for repairing damaged pipes using an injection machine, as defined in any of the preceding embodiments, which comprises the steps of:
- inserting the sprinkler head inside a conduit to be repaired;
   • actuating the linear actuator and injecting compressed air into the sprinkler head; and
   • spraying the mixture of materials for repairing conduits using the spray head, wherein said mixture of materials comprises a two-component resin.

Obviously, said method may comprise other steps such as removing a tap, a siphon or a toilet, to allow the sprinkler head to enter inside the pipe.

It is also possible, once access to the pipe is opened, to introduce a high-definition camera to be able to locate the deterioration or leak in the pipe, as well as determine how far away the breakdown is located. Said camera can even be inserted after spraying the material, to check if the repair is correct.

The steps of the method require that, to inject or spray the resin, the end of the hose must be inserted inside the pipe until it reaches the affected area. Once there, the linear actuator is activated pushing the contents of the cartridges with the resin components. These components are joined prior to their expulsion through the head and, subsequently, using compressed air and the configuration of the head, the resin begins to be injected.

### Description of the figures

To complete the description, and for the purpose of helping to make the features of the invention more readily understandable, this specification is accompanied by a set of drawings constituting an integral part of the same, wherein by way of illustration and not limitation the following has been represented:
- Figure 1 shows an injection machine for repairing conduits and pipes, where the frame and the linear actuator located on said frame can be observed. Likewise, the control panel of the injection machine can be observed, which allows regulating the operation of said machine.
- Figure 2 shows an injection machine for repairing conduits, which, unlike that which is shown in Figure 1, comprises a direct current motor located inside the frame, which can be connected to a wire rope.
- Figure 3A shows a perspective of the linear actuator of the invention, where the fixed rods can be observed oriented in a direction of actuation of the linear actuator, said fixed rods being connected by means of attachment plates.
- Figure 3B shows an elevation, cross-sectional view of the linear actuator shown in Figure 3A, where four sliding rods can be observed inside the linear actuator, configured to linearly move two pistons also shown in said figure 3B.
- Figure 4 shows a diagram of the operation of the injection machine, wherein the path of the conduit repair materials can be observed, from the cartridges to the sprinkler head.
- Figures 5A-5C are perspective views showing different sprinkler heads.
- Figure 6 shows a perspective of a centring device suitable for connecting to a sprinkler head and fixing its position inside the pipe.
- Figures 7A-7B show two elevation views, without cuts and cross-sectional, respectively, where the conveyance of the mixed material and pressurised air through the inside of said head can be observed.

### List of reference numbers shown in the figures:

1.- Injection machine;
2.- frame;
3.- linear actuator;
   31.- support;
   32.- sliding rods;
   33.- pistons;
   34.- fixed rods;
   35.- attachment plates;
4.- cartridges;
5.- mixer element;
6.- sprinkler head;
7.- centring device;
8.- first flexible conduit;
9.- second flexible conduit;
10.- third flexible conduits;
11.- control panel;
12.- compressed air inlet.

### Preferred description of the invention

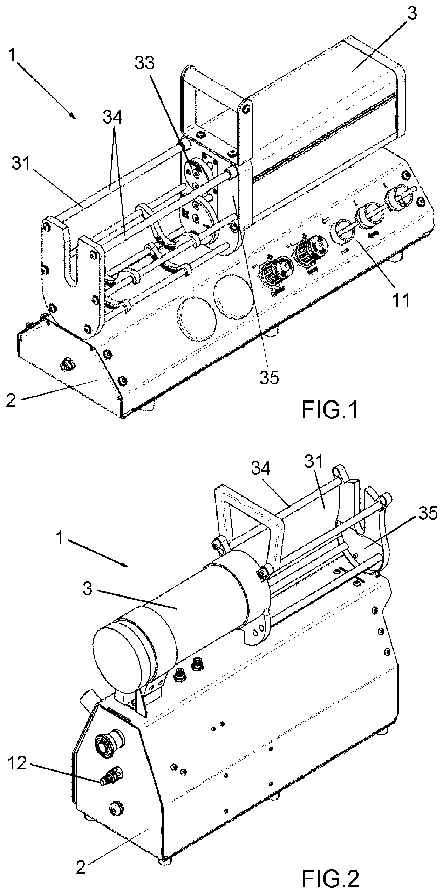

The preferred invention is shown in Figure 1, which represents an injection machine (1) of adhesive material, for repairing pipes or conduits that may comprise a crack, break or breakdown that prevents their correct operation and that generates or may generate defects in the building in which they are located, such as infiltrations and humidity. Said figure of the injection machine (1) mainly shows a frame (2), in which are supported the mechanical components of the injection machine (1) that are not introduced inside the conduits or pipes to be repaired, and a linear actuator (3) located and supported on said frame (2).

The elements comprised in the control and operation system of the injection machine (1) can be observed on the control panel (11) of the frame (2). In other words, all the buttons and pressure gauges that allow the user to control their operation from outside the conduits to be repaired. As can be seen, the control panel (11) comprises three control knobs, two pressure regulators and two pressure gauges. Likewise, the injection machine comprises an air injection flow regulator.

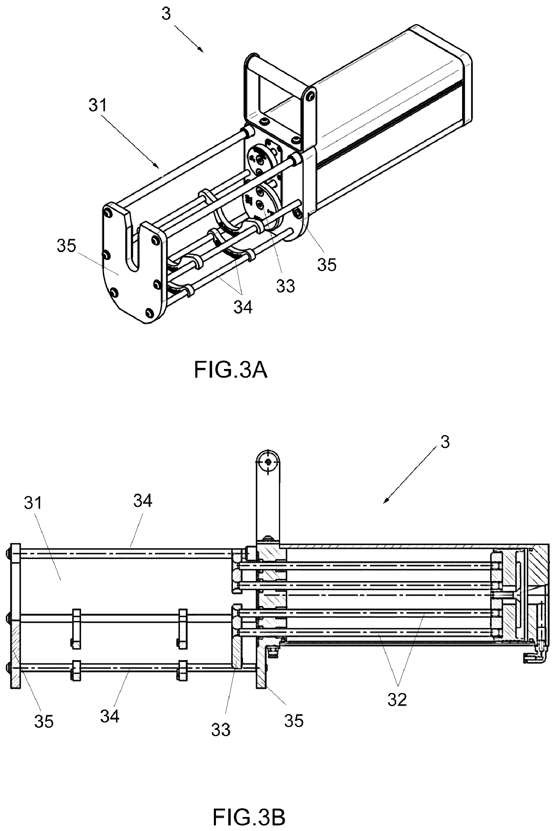

Moreover, figures 3A and 3B show what the linear actuator (3) looks like, which consists of a pneumatic cylinder, which comprises a support (31) configured to couple two cartridges (4) that contain materials, in a fluid state, for repairing conduits. This support (31) allows adequate attachment of these cartridges (4) while the linear actuator (3) is activated.

To do this, the linear actuator (3) comprises four sliding rods (32) inside the linear actuator (3), being configured to linearly move two pistons (33). Likewise, the support (31) of the linear actuator (3) comprises fixed rods (34), oriented in a direction of actuation of the linear actuator (3), said fixed rods (34) being connected by attachment plates (35) by end parts, such that the fixed rods (34) are configured to support the two cartridges (4) of materials for repairing conduits. Said configuration of rods described allows the support (31) of the linear actuator (3) to be configured to couple two cartridges (4) of the same or different volumes. That is, the two cartridges (4) to be coupled in the injection machine may have different cross section sizes that determine different volumes between the same. For example, cartridges can have a 1:1, 1:2, 1:3 or 2:3 ratio, depending on the materials to be used.

This is because the objective of the injection machine (1) is to be able to inject and spray, inside the conduits to be repaired, a mixture of components, considered a two-component resin, that is, it is made up of two components.

The operation of the injection machine (1) would be to couple the cartridges (4) to the support (31) of the linear actuator (3), fixing the same to prevent them from being easily removed. Depending on the size of said cartridges (4), removable supports adjusted to the size of the cross sections of said cartridges (4) can be used.

Once the two cartridges (4) are fixed, the user can activate the linear actuator (3), linearly moving the two pistons (33), which each push one base of the cartridges (4), causing the contained material to be expelled through an end part opposite to the place on which they are pressed. The amount of material expelled will depend on the cross section of the cartridges (4).

The other part of the injection machine (1) consists of sending the material expelled from each cartridge (4) to a mixer element (5) that receives them separately and mixes them in the proportions determined from the size of the cartridges (4).

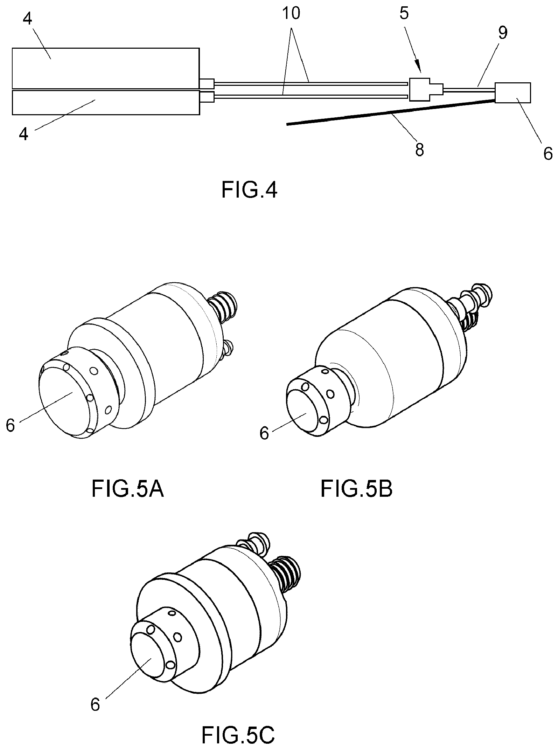

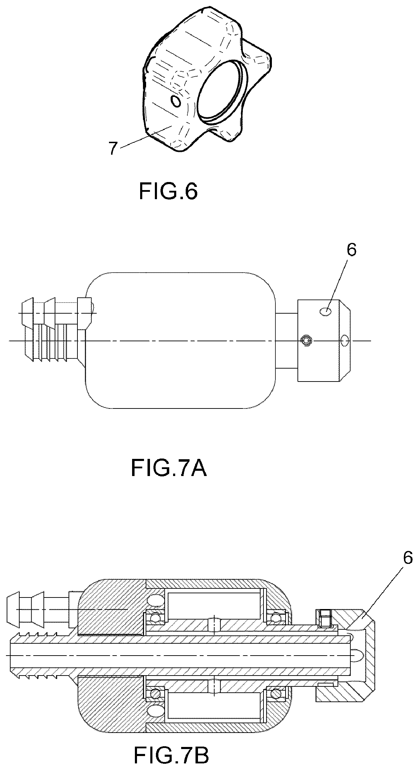

This mixer element (5) is connected to a sprinkler head (6) which receives the mixture of materials in the indicated proportion, also comprising a compressed air fluid inlet. The operation of the sprinkler head (6) can be interpreted from figures 5A-5C, as well as figures 7A-7B.

As can be seen in said figures, the sprinkler head (6) comprises an inlet for mixed materials, an inlet for compressed air fluid and a joint outlet for mixed materials and the compressed air fluid. Said compressed air allows the rotation of the head at a speed determined by the air inlet flow, which generates a spray of the mixture of materials received from the mixer element (5).

There are different embodiments for the communication of the cartridge materials with the sprinkler head (6) and can be interpreted from the diagram in Figure 4.

In an embodiment not shown in the figures, the cartridges (4) are each connected to two third flexible conduits (10), each configured to convey, separately, the material from each cartridge (4) to the mixer element (5), this mixer element (5) and the sprinkler head (6) being comprised in a single device, apparatus or component of the injection machine (1). Similarly, this device is also connected to a first flexible conduit (8), configured to flow compressed air from the frame (2) to the sprinkler head (6). The frame (2) comprises a compressed air inlet (12) configured to connect the injection machine (1) to an air compressor.

In this embodiment, the device comprising the mixer element (5) and the sprinkler head (6) is introduced inside the pipe to be repaired, in addition to as much extension of the first flexible conduit (8) and the two third flexible conduits (10) as required, to be able to position the sprinkler head (6) up to the breakdown or crack in the conduit to be repaired.

In another embodiment, the mixer element (5) and the spray head (6) may comprise two different devices, apparatuses or components, connected between them by a second flexible conduit (9), in the form of a cannula, configured to convey the mixture of the materials mixed by the mixer element (5) up to the sprinkler head (6). Likewise, the sprinkler head (6) is connected to a first flexible conduit (8), configured to flow compressed air from the frame (2) up to said sprinkler head (6) and the mixer element (5) is connected to the two third flexible conduits (10).

In this embodiment, the sprinkler head (6), the mixer element and as much extension as required of the first (8) and the third flexible conduits (10) could be introduced inside the pipe to be repaired.

In another embodiment, the injection machine (1) could comprise the mixer element together with the cartridges (4), without the need to use the two third flexible conduits (10), the mixer element (5) and the sprinkler head (6) being connected, between them, by the second flexible conduit (9), in the form of a cannula.

The choice between these embodiments depends on the characteristics of the mixed materials, since, if they comprise a fast-solidification two-component resin, the second flexible conduit (9) could become clogged if it is very long. However, it is obviously easier to insert the sprinkler head (6) inside the pipe to be repaired if it is connected to only two flexible conduits instead of three.

To ensure the correct position of the sprinkler head (6), the machine further comprises a centring device (7) connected to the sprinkler head (6), which keeps same centred inside the pipe. Said centring device consists of a part adjustable to the cylindrical inside of the pipe, comprising a through hole that allows the passage of the flexible conduits (8, 9, 10) up to the sprinkler head (6).

The three control knobs and two pressure regulators allow controlling the linear displacement speed of the linear actuator (3), likewise the air injection flow regulator allows controlling the rotation speed of the sprinkler head (6).

In the embodiment shown in Figure 2, the injection machine (1) comprises a connection to an electrical source, as well as a direct current motor. Said motor allows connecting to an axle cable that can be used to clean the pipe or conduit to be repaired.

## Claims

1. An injection machine (1) for repairing conduits and pipes, **characterised in that** it comprises:
- a frame (2);
- a linear actuator (3), preferably a pneumatic cylinder, supported on the frame (2), wherein said linear actuator (3) comprises a support (31) configured to couple two cartridges (4) of materials for repairing conduits;
- a control and operation system for the injection machine (1);
- a mixer element (5) configured to receive the materials for repairing conduits, from each of the cartridges (4) couplable to the support (31) of the linear actuator (3), and mix said materials;
- a sprinkler head (6), connected to the mixer element (5), which comprises an inlet for compressed air fluid, and a joint outlet for mixed materials and said compressed air fluid;
wherein the linear actuator (3) is configured to extract and steer or convey, towards the mixer element (5), the materials for repairing the conduits from the cartridges (4) couplable to the support (31) of the linear actuator (3), when said linear actuator (3) is activated; and wherein the sprinkler head (6) is configured to spray the mixture of materials from the cartridges (4), using the compressed air introduced into said sprinkler head (6).

2. The injection machine (1), according to the preceding claim, wherein the linear actuator (3) comprises a pneumatic cylinder comprising an effective diameter between 50 and 300 mm and a stroke comprised between 150 and 350 mm.

3. The injection machine (1), according to any of the preceding claims, wherein the linear actuator (3) comprises sliding rods (32), preferably four sliding rods (32), inside the linear actuator (3), being configured to linearly move two pistons (33) of the linear actuator (3).

4. The injection machine (1), according to any of the preceding claims, wherein the support (31) of the linear actuator (3) comprises fixed rods (34), oriented in a direction of actuation of the linear actuator (3), said fixed rods (34) being connected to attachment plates (35) by end portions of said fixed rods (34), wherein the fixed rods (34) are configured to support the two cartridges (4) of materials for repairing conduits.

5. The injection machine (1), according to any of the preceding claims, wherein the support (31) of the linear actuator (3) is configured to couple two cartridges (4) of the same or different volumes.

6. The injection machine, according to any of the preceding claims, comprising a centring device (7) connected to the sprinkler head (6).

7. The injection machine, according to any of the preceding claims, comprising a compressed air inlet (12) in the frame (2), configured to connect the injection machine (1) to an air compressor; and a first flexible conduit (8), configured to flow compressed air from the frame (2) to the sprinkler head (6).

8. The injection machine, according to any of the preceding claims, comprising a second flexible conduit (9), configured to convey the mixture of the materials mixed by the mixer element (5) to the sprinkler head (6).

9. The injection machine, according to any of claims 1 to 7, wherein the mixer element (5) and the sprinkler head (6) are comprised in a single device.

10. The injection machine, according to any of the preceding claims, comprising two third flexible conduits (10), each configured to separately convey the material from each cartridge (4) up to the mixer element (5).

11. The injection machine (1), according to any of the preceding claims, wherein the control and operation system is configured to control a rotation speed of the sprinkler head (6) by regulating the injection of compressed air to said sprinkler head (6) as well as the output speed of materials from the cartridges (4) by regulating the linear actuator (3).

12. The injection machine (1), according to any of the preceding claims, wherein the control and operation system comprises an air injection flow regulator and a control panel (11) comprising three control knobs, two pressure regulators and two pressure gauges.

13. The injection machine (1), according to any of the preceding claims, wherein the materials for repairing conduits contained in the cartridges comprise a two-component resin.

14. The injection machine (1), according to any of the preceding claims, comprising a connection to an electrical source.

15. The injection machine (1), according to the preceding claim, comprising a direct current motor.

16. A method for repairing damaged pipes using an injection machine, as defined in any of the preceding claims, comprising the steps of:
- inserting the sprinkler head (6) inside a conduit to be repaired;
- activating the linear actuator (3) and injecting compressed air into the sprinkler head (6);
- spraying the mixture of materials for repairing conduits using the sprinkler head (6), wherein said mixture of materials comprises a two-component resin.
